# EUROPEAN PATENT APPLICATION

(11) **EP 3 767 417 A1**
(43) Date of publication of application: **20.01.2021**
(21) Application number: 19186275.4
(22) Date of filing: 15.07.2019
(51) Int. Cl.: G05D 1/00, G01M 1/00

(54) **METHOD OF PERFORMING AN INSPECTION AND AN AIRBORNE SYSTEM THEREFORE**

(71) Applicant: Ventus Engineering GmbH, 1030 Wien (AT)
(72) Inventor: MINGALIEV, Shavkat, 1010 Wien (AT); LÜBKER, Poul Anker Skaarup, 6340 Baar (CH); MØLLER, Preben, 8970 Havndal (DK); SVENSSON, Michael Thorup, 7000 Fredericia (DK)
(74) Representative: Tellefsen, Jens J.

(57) **Abstract**

The present disclosure relates to a method of performing an inspection of an object using an unmanned aerial vehicle (UAV) an airborne system therefore. The UAV may be carrying at least one distance measuring means and a detector. The method may comprise an act of obtaining a position of the UAV in a coordinate system. The method may comprise an act of determining a distance of the UAV to the object based on measurements from the distance measuring means. The method may comprise the further act of positioning the UAV as a function of at least the distance.

The present disclosure furthermore relates to computer program products for implementation of the method in the system.

## Description

### Field of the Invention

The present disclosure relates to a method of performing an inspection of an object using an unmanned aerial vehicle (UAV) an airborne system therefore. The UAV may be carrying at least one distance measuring means and a detector. The method may comprise an act of obtaining a position of the UAV in a coordinate system. The method may comprise an act of determining a distance of the UAV to the object based on measurements from the distance measuring means. The method may comprise the further act of positioning the UAV as a function of at least the distance.

The present disclosure furthermore relates to computer program products for implementation of the method in the system.

### Background of the Invention

Inspection using airborne vehicles has increased interest. Especially aerial drone images are widely used for mapping out larger areas and drones carrying cameras of different kinds are generally known. The airborne vehicles are typically manually controlled by a drone pilot and the camera is typically relying on auto-focusing for acquiring sharp images. In case of still images, the triggering of the camera may be performed automatically in pre-defined time intervals or on signals initiated by the drone pilot.

Manual triggering of the airborne camera by the drone pilot places great demands on the drone pilot for triggering the camera, when the drone is in a correct position.

### Object of the Invention

It is an objective to present a method of performing an inspection and an airborne system therefore, which overcomes one or more drawbacks of those currently known.

### Description of the Invention

One objective of the disclosure may be achieved by a method of performing an inspection of an object using an unmanned aerial vehicle (UAV). The UAV may be carrying at least one distance measuring means and a detector.

The method may comprise an act of obtaining a position of the UAV in a coordinate system. The method may comprise an act of determining a distance of the UAV to the object based on measurements from the distance measuring means. The method may comprise the further act of positioning the UAV as a function of at least the distance. Furthermore, the method may comprise the acts of triggering the detector as a function of at least the position of the UAV to perform the inspection and of performing the inspection for collecting a sample dataset.

In one aspect, the object may be a facility.

In one aspect, the distance measuring means may be a 3D profiling device.

The inspection may be performed at a distance to the object e.g. imaging of the object surface. The inspection may be performed on the object, e.g. taking samples of the object, surface-adsorbed matters etc. Such samples may include material samples.

In one aspect the detector may be a camera adapted to acquire an image.

In one aspect the detector may be a gas detector adapted to acquiring a gas sample.

In one aspect the detector may include diagnostic equipment, e.g. for establishing contact with a lightning receptor on a wind turbine blade and with equipment mounted on the UAV to measure the strength of the connection from the contact point to ground. Other diagnostic equipment may be NDT equipment to detect cracks and structural damages on and/or in an object.

One effect of the embodiment may be to position the UAV with high accuracy relative to the object to be inspected. A further effect may be to navigate the UAV also with high accuracy relative to the object to be inspected.

The precise positioning and/or navigation may be performed in real time and controlled automatically using a control system with data input of the distance to the object.

The precise positioning and/or navigation in real time has the effect that the detector may be triggered automatically when the drone is in a correct position and/or at a correct distance to the object.

A further effect of the embodiment may be the ability to measure the distance from the UAV to a "white" object with the advantage of achieving precise positioning and/or navigation performed in real time and controlled automatically using a control system with data input of the distance to the object.

Here "white objects" may be defined as objects without focus points.

This may be further advantageous in cases where the inspection includes imaging the surface, especially when acquiring sharp images are required.

For example, when an airborne vehicle carries a camera, controlling the airborne vehicle's distance to an object is important as current technology does not allow a camera to automatically focus on solid-coloured surfaces, such as white and glossy surfaces, etc. Likewise, it is important that the camera is activated such that the desired surface section is fully covered by the acquired images.

In one aspect, the carried camera may have a pre-set focus or a motorized focus adjustment for setting the focus as a function of the determined distance.

In one aspect the method may comprise a further act of performing repairs on the object.

In one aspect the method may comprise a further act of cleaning the object.

In one aspect the method may comprise a further act of retrofitting and/or upgrading the object by adding or removing elements to/from the object.

In one embodiment, the method may comprise the further acts of establishing a 3D profile of the object for determining a flight path of the UAV during inspection, and of setting one or more triggering positions along the flight path.

One effect of establishing the 3D profile of the object is that using the 3D profile in combination with the determined distance to the object and the UAVs position relative to the target, the UAV may fly autonomously.

A further effect of determining the flight path and setting the triggering points may be achieved that the detector may also be triggered autonomously, thereby obtaining a precise triggering of the detector independently of a drone pilot.

Hence, this embodiment may achieve autonomously inspection of an object using a UAV.

In one further embodiment, the act of establishing the 3D profile of the object may be performed by providing an existing 3D profile of the object or by scanning the surface of the object using the distance measuring means.

One effect of this further embodiment may be that existing 3D profiles such as technical drawings of the object, previously established 3D profiles etc. may be used for determining the flight path. The existing 3D profiles may comprise indications of specific areas relevant for inspection.

For establishing the 3D profile by scanning the surface, a pre-instructed non-precise flight path may be determined for the UAV or a manually-controlled flight of the UVA may be performed.

Once the 3D profile is established, the UAV may take over the flight and autonomously conduct the inspection of the object or parts thereof. The UAV may also autonomously conduct other relevant action according to the determined precise flight path and the set triggering positions.

In one embodiment of the method, the act of positioning the UAV may be performed to maintain a predetermined distance, and the act of triggering may be performed with the detector adjusted to perform the inspection as a function of at least the predetermined distance.

One effect of the embodiment may be performing a continuously correction of the UAV's positon according to the object. This may be advantageous if the UAV is suddenly pushed off the course given, this may be the flight path and/or if the surface of the object has changed relative to the established 3D profile e.g. if the surface has a hole or protrusion, which is not registered on or appear from the 3D profile.

Furthermore, the embodiment may be advantageous in regard to flying the UAV autonomously, in case the UAV loses its position in the GPS system and cannot restore it. The UAV may then be re-positioned using the predetermined distance to the object and coordinates related thereto or to the flight path. This may be in offshore areas, in underground facilities or in 'dead' areas where a communication with a GPS/GNSS or other positioning system is not available.

Yet furthermore, the embodiment may be advantageous in regard to landing the UAV at the object and/or take off of the UAV from the object. The predetermined distance may be set to decrease or increase in intervals or as a function or specific parameters for the UAV to approach or distance itself from the object.

A further effect of the embodiment may be to position and navigate the UAV relative to a moving object. The ability to measure the distance from the UAV to the moving object may have the advantage of achieving precise positioning and/or navigation performed in real time and controlled automatically using a control system with data input of the distance to the object.

When an airborne vehicle carries a camera, the camera may be set with fixed focus. With a LiDAR installed on the UAV, the information from this LiDAR may ensure that the drone holds a fixed distance to the object and hence, always achieves sharp images of the object.

Alternatively, the camera may be programmed to operate the focus autonomously to use the predetermined or the actual distance to the object to control the focus on the camera, thereby achieving flexibility over the airborne vehicle's distance to the object to ensure that sharp images may always be acquired. This may have the further advantage of achieving images of a larger or smaller field of view during the inspection, if e.g. a given surface area requires more detailed inspection.

Due to the precise positioning of the UVA, the method may provide for further uses.

One further use of the method may be for navigation and positioning of the UAV in regard to objects to deviate from.

Another further use may include landing special equipment on the surface of the object or interacting with the surface through special equipment carried by the UAV. The UAV may be brought to land, for example, on a wind turbine blade in a predetermined position. The landing may be assisted by use of additional positioning data devices such as gyros, GPS receivers, accelerometers, amongst others, for an autonomous controlled landing and/or assisted by a drone pilot for manually assisted landing.

The special equipment may include landing gear adapted for holding the UAV fixed in the landing position, for example, on a wind turbine blade, on the side of a building amongst others.

The special equipment may include repair systems for performing a temporary or permanent repair of the object.

Other types of special equipment may be carried by the UAV. This could be maintenance equipment, e.g. for cleaning, installation equipment for retrofitting or upgrading the object or facility.

In one embodiment of the method, the act of obtaining the position of the UAV in the coordinate system is performed by calculating the position using at least one beacon signal with predetermined coordinates in the coordinate system.

Normally, GPS or other kinds of satellite signals are available, which allows for the navigation of airborne vehicles. However, in case such signals are not available e.g. in dead areas such as steel tanks, underground mines, inside wind turbine towers, chimneys etc., or where signals are available but inaccurate in relation to the desired precision, other position signals may be needed.

One effect of this embodiment may be to inter-relate the coordinate system of the beacon signals with the coordinate system of the UAV. The beacon signal may relate to a global position system, e.g. GPS/GNSS and/or a local coordinate system e.g. RTK, local aerial or naval positioning systems etc. Hence, the positions of the UAV and the object may be correlated to each other using a common coordinate system - synchronized in position.

The beacon signals may be guiding signals such as signals from aerodrome beacons or airport beacons. These may be permanent beacons.

The beacon signals may comprise additional information, which may be suitable for navigation, e.g. in regard to objects to deviate from. The objects if fixed may be used as beacons.

Hence, the beacon signals may be mechanical signals or digital signals.

Alternatively, temporary beacons may be used, such as one or more "dots" established by laser beam(s) controlled by external equipment with known position, to ensure precision of the coordinate system.

The positioning and navigation of the UAV using beacon signal may be performed by use of one, more or all of the following aspects.

There may be a maps/navigation information for setting the direction and velocity of the UAV towards the next beacon or the object. There may be distance measurements from the distance measurement means to continuously verify the drone's location to beacons or the object. There may be an image recognition of beacons, recognizable contours or other visible objects can also be used to recognize specific positions and thereby determine the current position of UAV.

The UAV may comprise additional information for conducting precise autonomously inspection and navigation of instructions regarding inspections of full target object or only part of the target object. In addition or alternatively there may be beacons to be recognised on the flight route.

The flight of the UAV from the starting place to the object and from the object to the landing ground may be conducted in the following ways. The flight may manually be guided by a UAV pilot. The flight may autonomously be guided by GPS. The flight may autonomously be guided by one or more laser beam(s) or other means giving the UAV directional guidance to go from its starting position to reach the target object. The source(s) may be located in one or more beacons. In one embodiment, autonomously where the UAV recognises one or more beacons and uses these beacons in combination with 3D scanning or 3D drawings of the flight route for controlling its flight path - in combination with other relevant instruments on the UAV, e.g. the distance measurement or 3D profiling means to avoid collisions and providing relevant scanning data for the UAVs to retrieve a position.

In one embodiment, the method comprises the further acts of tracking along a surface of the object and angularly displacing the detector as a function of a curvature of the object surface.

One effect of this embodiment may be to orient the detector according to the curvature of the surface, for example to obtain a direction being perpendicular to the surface. This may be advantageous in regard to obtaining sharp images. Alternatively, the detection direction may be parallel to the surface. This may be advantageous in regard to inspection of airstreams or fluidic flows.

In one embodiment, the method comprises the further acts of collecting timestamped datasets of sample datasets and positions of the UAV and time synchronising the datasets to obtain time synchronized inspection results. The act of time synchronization is performed in at least one synchronisation system for synchronizing collected and time stamped data.

One effect of the time synchronization may be to collect a number of sample datasets and piece them together according to the flight path, the 3D profile of the object, the UAVs position amongst others. This may be advantageous in regard to mapping the conditions in a greater area, e.g. achieving an accumulated image of an entire wind turbine blade, achieving an accumulated image of the interior of a steel tank, mapping the air streams and/or the content of gasses present in an underground mine, etc.

In one embodiment, the method comprises the further acts of transmitting the collected datasets and/or processed datasets wirelessly to an external server.

Initially the raw datasets may be stored in a data memory located on the UAV - for potentially processing/performing analysis during the flight.

The raw and/or processed datasets may be transferred wirelessly to an external server during inspection, during flight or when the UAV has reached the landing ground.

In another aspect the datasets may be transmitted by wire to an external server.

One objective of the disclosure may be achieved by a system for performing inspection of an object. The system may comprise an UAV and distance measuring means adapted to at least determine a distance of the UAV to the object. The system may further comprise a detector adapted to perform an inspection. The system may furthermore comprise trigger means adapted to trigger the detector. The system may furthermore comprise a processor adapted to perform the acts of the method of performing an inspection of an object using an UAV.

In one aspect, the object may be a facility.

In one aspect, the distance measuring means may be a 3D profiling device.

In one aspect the detector may be a camera adapted to acquire an image.

In one aspect the detector may be a gas detector adapted to acquiring a gas sample.

In one aspect the detector may include diagnostic equipment, e.g. for establishing contact with a lightning receptor on a wind turbine blade and with equipment mounted on the UAV to measure the strength of the connection from the contact point to ground. Other diagnostic equipment may be NDT equipment to detect cracks and structural damages on and/or in an object.

The effects of this embodiment may be a system with the effects and advantages previously presented for the embodiments of the method of performing an inspection of an object using an UAV. Also the exemplified scenarios in relation to the disclosed method may be achieved with the system.

The effects achieved with the system may include positioning and/or navigating the UAV with high accuracy relative to the object to be inspected.

The precise positioning and/or navigation may be performed in real time and controlled automatically using a control system with data input of the distance to the object, with the effect that the detector may be triggered automatically when the drone is at a correct distance or in a correct position to the object.

A further effect of the embodiment may be the ability to measure the distance from the UAV to a "white" object with the advantage of achieving precise positioning and/or navigation performed in real time and controlled automatically. This may be further advantageous in the cases where the inspection includes imaging the surface, especially when acquiring sharp images are required.

The effects of the system may support an autonomously flying UAV and for autonomous inspection of an object using a UAV.

The system may provide for post-processing of the datasets to be performed during the inspection either by the UAV processor or by use of an external server to which the collected datasets may be transferred wirelessly and analysed during flight of the UAV. The simultaneous pre-processing may be advantageous in regard to repeating or performing additional actions as a consequence of image recognition algorithms detecting issues to be inspected further, failed inspection or inspections with too low quality. This may include situations where the image is blurred and must be taken again. The resolution of an acquired image is too low, the amount of an acquired sample is to small etc., and the UAV may return to the triggering position of the inspection and perform a new inspection, maybe this time with adjusted parameters. The distance measurements were not accurate and a reposition may be performed. There may be identified issues to be inspected in higher details.

The embodiment may have the advantage of obtaining a system with multiple levels of security for repositioning the UAV and/or correcting the navigation. These levels of security may be built-in functionalities and hence, autonomously self-correcting functionalities, e.g. in case the UAV loses its position in the GPS system and cannot restore it. The UAV may then be repositioned using the predetermined distance to the object and coordinates related thereto or to the flight path. This may be in offshore areas, in underground facilities or in 'dead' areas where communication with a GPS/GNSS or other positioning system is not available.

A further effect of the embodiment may be to position and navigate the UAV relative to a moving object. The ability to measure the distance from the UAV to the moving object may have the advantage of achieving precise positioning and/or navigation performed in real time and controlled automatically using a control system with data input of the distance to the object. This may be beneficial also in regard to avoiding collisions.

The distance measuring means may in general be used with two purposes: To position and navigate relative to the object to be inspected, and to detect unforeseen objects and deviate from them to avoid collisions.

In one embodiment of the system, the distance measuring means may be a LiDAR.

LiDAR technology is developing rapidly (including high resolution 3D scanning of profiles) and may be used for measuring the distance to the object and/or simultaneously correcting the established 3D profile of the object. LiDAR may be used for scanning the 3D profile of the object in a quick first UAV flight. This initial 3D scanning of the profile of the object can be used to establish the 3D profile of the object to be inspected.

When an airborne vehicle carries a camera, the camera may be set with fixed focus. With a LiDAR installed on the UAV, the information from this LiDAR may ensure that the drone holds a fixed distance to the object and hence, always achieves sharp images of the object.

In one embodiment the system may furthermore comprising position detection means adapted to obtain a position in a coordinate system of the UAV. The position detection means may be adapted to receive beacon signals of a type chosen amongst the group of GPS, GNSS, radio, optical, radar and sound.

One effect of this embodiment may be that the system may navigate using established beacons and may use the available beacon signal.

A further effect may be to interrelate the coordinate system of the beacon signals with the coordinate system of the UAV. The beacon signal may relate to a global positioning system, e.g. GPS/GNSS and/or a local coordinate system e.g. RTK, local aerial or naval positioning systems, etc. Hence, the positions of the UAV and the object may be correlated to each other using a common coordinate system synchronized in position.

The beacon signals may be guiding signals such as signals from aerodrome beacons or airport beacons. These may be permanent beacons.

The beacon signals may comprise additional information, which may be suitable for navigation e.g. in regard to objects to deviate from. The objects if fixed may be used as beacons.

Hence, the beacon signals may be mechanical signals or digital signals.

The positioning and navigation of the UAV using beacon signal may be performed by use of map or navigation information for setting the direction and velocity of the UAV towards the next beacon or the object. It may be used for distance measurements from the distance measurement means to continuously verify the drone's location to beacons or the object. It may be used for image recognition of beacons, recognizable contours or other visible objects can also be used to recognize specific positions and thereby determine the current position of UAV.

The UAV may comprise additional information for conducting precise autonomous inspection and navigation of instructions regarding inspections of full target object or only part of the tar-get object and/or beacons to be recognised on the on the flight route.

In one embodiment the system may further comprising beacon signal means adapted to provide beacon signals.

One effect of this embodiment may be to set up a local beacon system to achieve precise position and/or navigation of the UAV even in locations where other beacons with known position may not be available or accessible.

For example, temporary beacons comprising a laser system may set up with a known position. The laser system may establish one or more "dots" controlled by external equipment for guiding or positioning the UAV. The known position of the laser system may ensure high precision of positioning and navigation of the UAV.

In one embodiment of the system, the UAV further comprises special equipment for interacting with the surface of the object.

The effects and advantages of this embodiment are substantial, according to those previously described for the further uses in relation the embodiments of the method. The special equipment may include landing gear adapted for holding the UAV fixed in the landing position, for example, on a wind turbine blade, or on the side of a building amongst others.

The special equipment may include repair systems for performing a temporary or permanent repair of the object.

Other types of special equipment may be carried by the UAV for example maintenance equipment, e.g. for cleaning, installation equipment for retrofitting or upgrading the object or facility.

One objective of the disclosure may be achieved by a computer program product comprising instructions to cause the processor to execute the method acts of the method of inspecting an object using an UAV.

One effects of the embodiments of computer program products may be to implement the method in the system as a computer controlled system and hence to achieve the autonomous UAV system and inspection

One objective of the disclosure may be achieved by one or more computer program products comprising instructions to perform pre-processing of the collected sample datasets and/or quality inspections of the performed measurements with the distance measuring means and/or of the collected sample datasets.

One effects of the embodiments of computer program products may be to implement the method in the system as a computer controlled system and hence to achieve the autonomous UAV system and inspection

One effect of the embodiment of computer program products may be to check the quality of the measured and collected data in real time during the flight and if certain criteria are not met, necessary corrective action related to flight pattern and new measurements or collected datasets may be performed autonomously.

Another effect may be to provide for pre-processing of the datasets to be performed during the inspection either by the UAV processor or by use of an external server to which the collected datasets may be transferred wirelessly and analysed during flight of the UAV. The simultaneous pre-processing may be advantageous in regard to repeating or performing additional actions as a consequence of image recognition algorithms detecting issues to be inspected further, failed inspection or inspections with too low quality. This may include situations where: The image is blurred and must be taken again. The resolution of an acquired image is too low, the amount of an acquired sample is to small etc., and the UAV may return to the triggering position of the inspection and perform a new inspection, maybe this time with adjusted parameters. The distance measurements were not accurate and a reposition may be performed. There may be identified issues to be inspected in higher details.

The computer program products may include artificial intelligence and/or machine learning algorithms.

A further effect of pre-processing concluded during the flight may be that, the UAV autonomously may change the flight path. This may for example occur in case damages to the object and/or faults in the inspection are identified. The flight path change and may be performed in combination with artificial intelligence and/or machine learning and the pre-processing.

The change in flightpath may for example include a detour to go back to the inspected area to perform the inspection again or to change the distance to object to obtain a better or more detailed inspection result. E.g. in case of an inspection including imaging, the distance may be changed to obtain more detailed images. In this case, the repeated inspection may include that: the focus of the camera may be changed to adjust the quality of the images either manually by a small motor installed together with the camera or controlled directly by the computer program product installed in the processor, and the triggering may be adjusted by the computer program product installed in the processor to take into consideration the now smaller area covered by the image.

In example a UAV may be configured for inspection of a wind turbine as follows.

The UAV is configured so that when a particular inspection is concluded during the flight by the in the UAV configured with artificial intelligence configured for image recognition, and if a damage on the blade is identified, then the UAV is configured to autonomously include a flight path to go back to this area of attention. In example the distance to object may be changed to obtain more detailed images by the drone pilot or autonomously. Optionally a zoom on the camera will be changed to adjust the quality of the images either manually by a small motor installed together with the camera. Alternatively the zoom is controlled directly by a camera. The automatic trigger mechanism in the UAV may be adjusted to take into consideration the now changed, typically smaller, area covered by the image

One objective of the disclosure may be achieved by a computer-readable media having stored there on the any one or more of the computer program products disclosed herein.

Both the external server and the processor of the UAV may comprise or be in communication with a computer-readable medium.

One effect of the embodiments of the computer-readable media may be to implement the method in the system as a computer controlled system and hence to achieve the autonomous UAV system and inspection.

Having computer-readable media supports that the collected and measured data during the flight is accessible but also that information for the autonomously flight and inspection may be uploaded to the UAV for accessibility even in case of the UAV entering 'dead' areas with the consequence of lost communication with other systems The system may provide for post-processing of the datasets to be performed during the inspection either by the UAV processor or by use of an external server to which the collected datasets may be transferred wirelessly and analysed during flight of the UAV. The simultaneous pre-processing may be advantageous in regard to repeating or performing additional actions as a consequence of image recognition algorithms detecting issues to be inspected further, failed inspection or inspections with too low quality. This may include situations where: The image is blurred and must be taken again. The resolution of an acquired image is too low, the amount of an acquired sample is to small etc., and the UAV may return to the triggering position of the inspection and perform a new inspection, maybe this time with adjusted parameters. The distance measurements were not accurate and a reposition may be performed. There may be identified issues to be inspected in higher details.

### Description of the Drawing

Embodiments of the invention will be described in the figures, whereon:
- Fig. 1: illustrates one embodiment of the method
- Fig. 2: illustrates two further embodiments of the method
- Fig. 3: illustrates one embodiment of the system
- Fig. 4: illustrates two embodiments of establishing 3D profiles
- Fig. 5: illustrates one embodiment of the positioning of the UAV
- Fig. 6: illustrates one embodiment of the system and the use of beacon signals
- Fig. 7: illustrates one embodiment of tracking along the surface of the object

**Detailed Description of the Invention**

| Item | No |
|---|---|
| 1 | system |
| 10 | object |
| 12 | object surface |
| 14 | curvature |
| 16 | 3D profile |
| 20 | unmanned aerial vehicle (UAV) |
| 22 | flight path |
| 24 | triggering positions |
| 30 | distance measuring means |
| 32 | LiDAR |
| 40 | detector |
| 48 | special equipment |
| 50 | position |
| 52 | coordinate system |
| 54 | beacon signal |
| 56 | predetermined coordinates |
| 58 | position detection means |
| 60 | distance |
| 62 | predetermined distance |
| 70 | inspection |
| 72 | sample dataset |
| 74 | inspection result |
| 80 | trigger means |
| 84 | beacon signal means |
| 90 | processor |
| 92 | computer program product |
| 94 | computer-readable medium |
| 96 | synchronisation system |
| 98 | server |
| 100 | method |
| 102 | obtaining |
| 104 | determining |
| 106 | positioning |
| 108 | triggering |
| 110 | performing |
| 112 | tracking |
| 114 | angularly displacing |
| 116 | establishing |
| 118 | collecting |
| 120 | time synchronising |
| 122 | transmitting |
| 128 | scanning |
| 130 | settting |

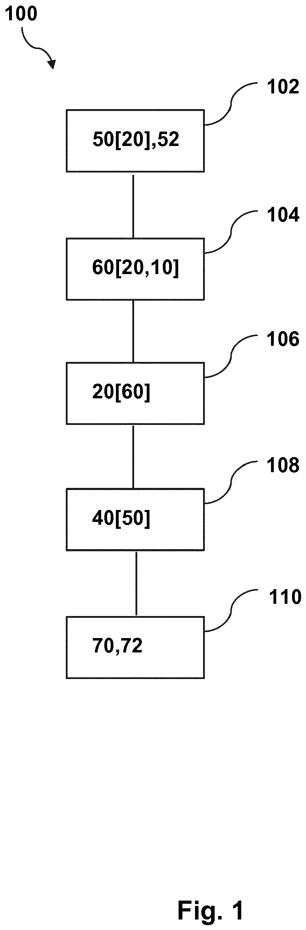

Figure 1 illustrates one embodiment of the method 100 of performing an inspection 70 of an object 10 using an unmanned aerial vehicle (UAV) 20. The method comprises the acts of obtaining 102 a position 50 of the UAV 20 in a coordinate system and determining 104 a distance 60 of the UAV 20 to the object 10 based on measurements from the distance measuring means 30. The distance may be the distance to the surface of the object.

The method furthermore comprises the acts of positioning 106 the UAV 20 as a function of at least the distance 60, triggering 108 the detector 40 as a function of at least the position 50 of the UAV 20 to perform the inspection 70, and performing 110 the inspection 70 for collecting a sample dataset 72.

Depending on the type of inspection, a suitable or multiple detectors 40 may be chosen and thus, the sample dataset 72 depends on the detector 40. The detector could for example be a camera, spectrometers e.g. a gas detector, etc.

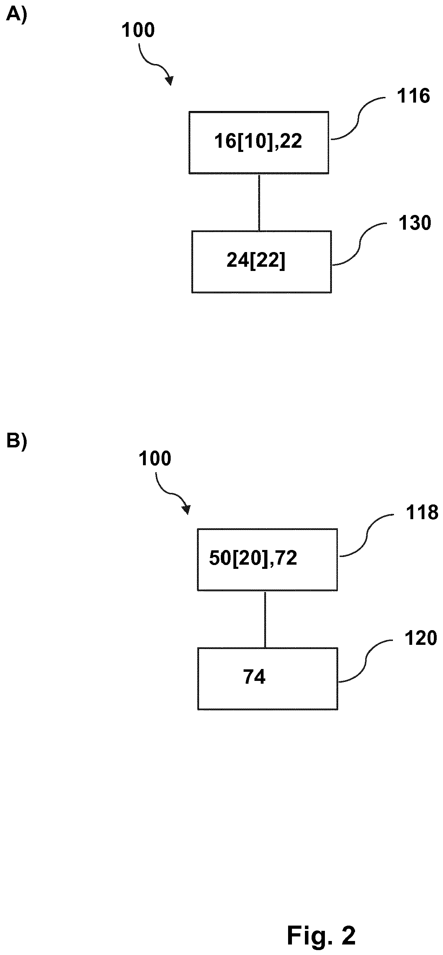

Figure 2 illustrates two further embodiments of the method 100. Figure 2A illustrates additional acts comprised in one further embodiment of the method 100 of establishing 116 a 3D profile 16 of the object 10 for determining a flight path 22 of the UAV 20 during inspection 70 and of setting 130 one or more triggering positions 24 along the flight path 22.

Figure 2B illustrates additional acts comprised in another further embodiment of the method 100 of collecting 118 timestamped datasets of sample datasets 72, positions 50 of the UAV 20, and time synchronising 120 the datasets to obtain time synchronized inspection results 74. The time synchronization 120 may be performed in at least one synchronisation system for synchronizing collected and time stamped data.

The additional acts illustrated in figure 2A and 2B may be combined into yet another embodiment of the method 100.

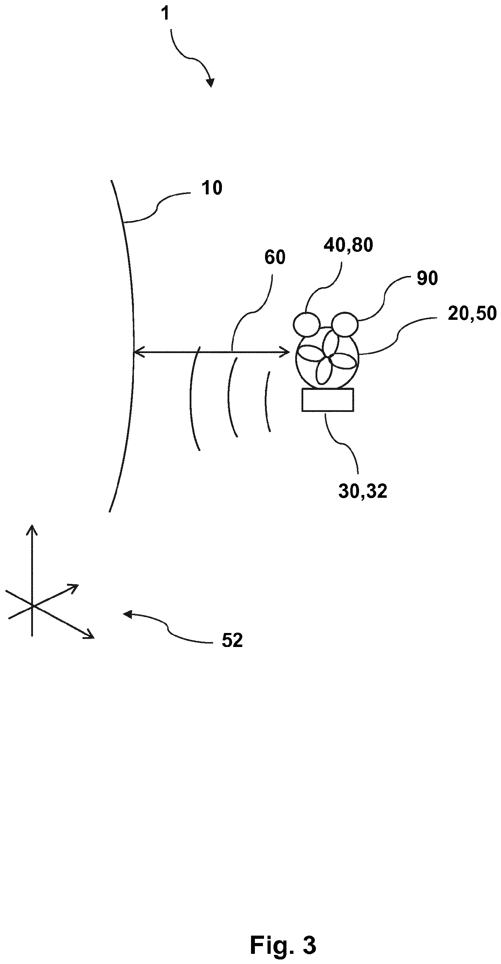

Figure 3 illustrates one embodiment of the system 1 for performing inspection of an object. The system comprises an UAV 20, distance measuring means 30, detector 40, trigger means 80 and a processor 90.

The distance measuring means 30 is adapted to at least determine a distance 60 of the UAV 20 to the object 10, here, the distance 60 to the object is from the UAV to the objects surface. The distance measuring means 30 can be 3D profiling means e.g. a Lidar 32. 3D profiling means including LiDARs can be used for scanning the object 10 and obtaining a 3D profile 16.

The detector 40 is adapted to perform an inspection. The inspection could be imaging, collecting environmental samples, measuring weather data, visibility conditions amongst others.

The trigger means 80 is adapted to trigger 108 the detector 40. The conditions for triggering may be set as a function of one or more of the detected, measured or obtained data and/or pre-set/preloaded data to the processor 90.

The processor 90 is adapted to perform the act of the method of performing an inspection 70 of an object 10 using an unmanned aerial vehicle (UAV) 20.

The position of the UAV and the position of the object may be correlated according to one coordinate system 52.

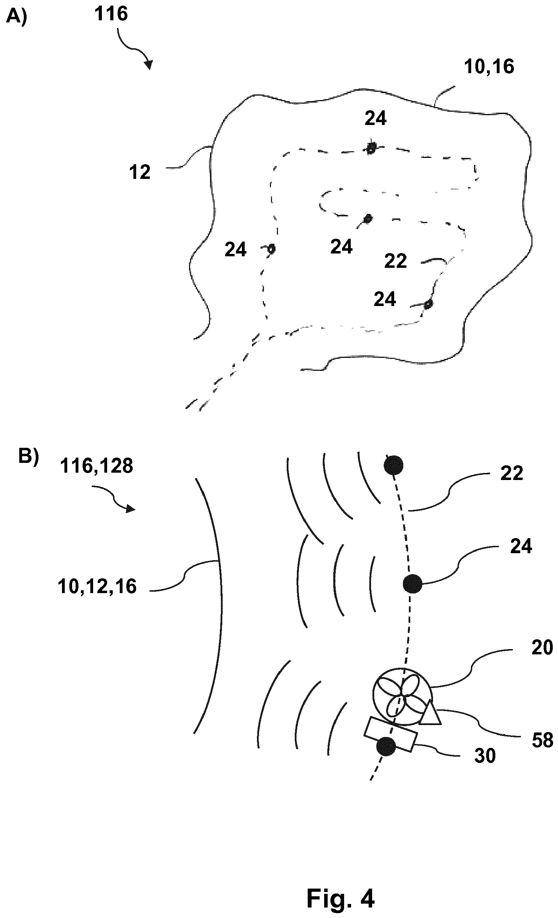

Figure 4 illustrates two embodiments of establishing 116 the 3D profile 16 of the object 10. Figure 4A illustrates one embodiment wherein the 3D profile 16 is provided as an existing 3D profile 16 of the object 10. The illustrated object 10 is a facility e.g. a mine shaft, cave, building, ship or comparable facilities.

From the 3D profile 16, a flight path 22 of the UAV can be determined. The flight path 22 can be limited to the facility premises for the inspection 70 or may be extended to the starting and landing ground. When the flight path 22 has been determined, one or more triggering positions 24 can be set along the flight path 22. Alternatively, the flight path 22 may be determined, such that one or more pre-set triggering positions 24 are incorporated therein.

Figure 4B illustrates another embodiment wherein the 3D profile 16 is established 116 by scanning 128 the surface 12 of the object 10 using the distance measuring means 30. The illustrated object 10 could be a facade of a building, or and installation e.g. a wind turbine tower, or a blade, amongst others.

As for the embodiment in figure 4A, a flight path 22 of the UAV 20 can be determined based on the 3D profile 16. The flight path 22 can be limited to the premises for the inspection or may be extended to the starting and landing place. When the flight path 22 has been determined, one or more triggering positions 24 can be set along the flight path 22. Alternatively, the flight path 22 may be determined, such that one or more pre-set triggering positions 24 are incorporated. The UAV is illustrated to comprise position detection means 58.

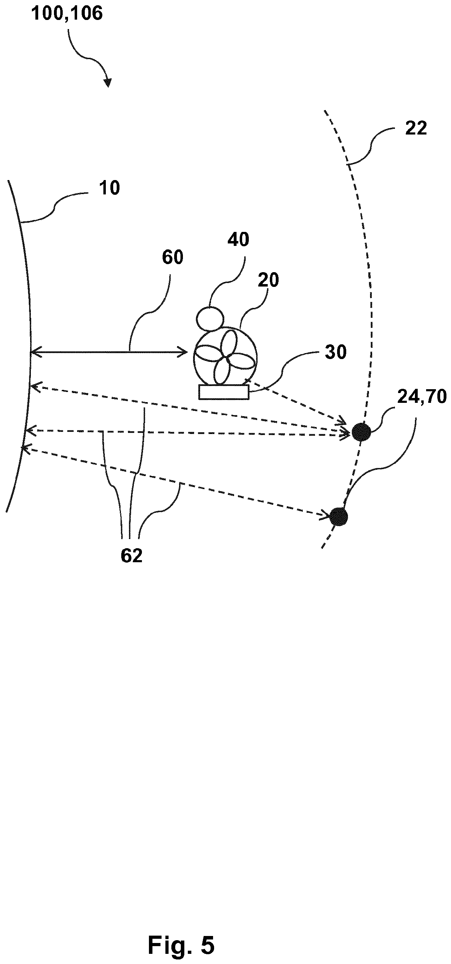

Figure 5 illustrates one further embodiment of the method 100 of performing an inspection of an object 10 using an UAV 20. The embodiment illustrates the act of positioning 106 the UAV 20 as a function of at least the distance 60. The positioning 106 is performed to maintain a predetermined distance 62.

The predetermined distance and/or the determined distance 60 may be pre-set and/or measured in any given direction depending on the setting of the system. For example, the distances may be set/measured perpendicular to the surface, along a straight line of flight amongst others, as illustrated by the dashed lines of predetermined distances 62.

In this embodiment, the triggering positions 24 for triggering the detector 40 to perform the inspection 70 is set as a function of at least the predetermined distance 62.

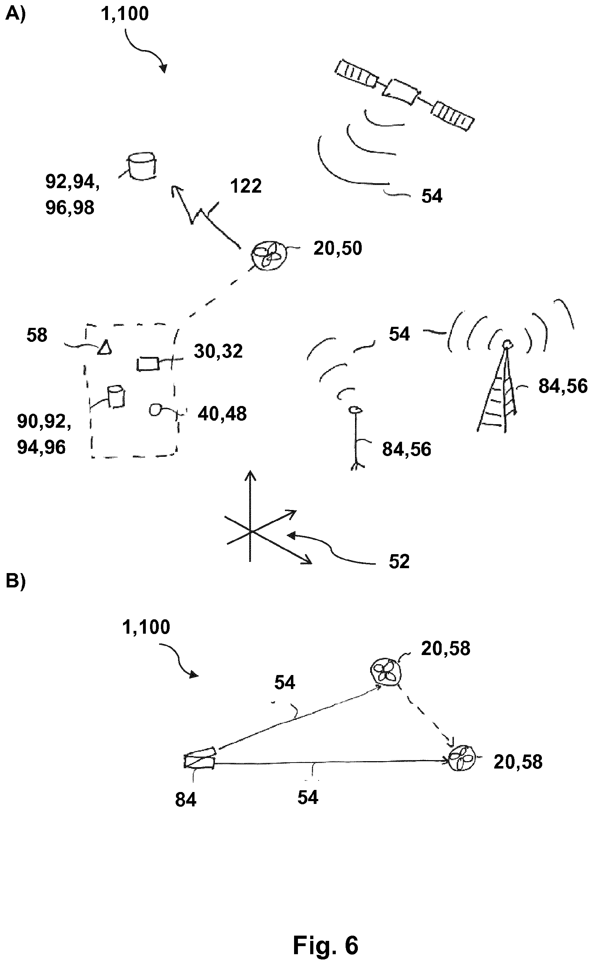

Figure 6 illustrates two embodiments of the system 1 supporting one further embodiment of the method 100. The embodiment in figure 6B is an alternative embodiment in regard to the beacon signals 54 and means 84.

The system 1 comprises position detection means 58 adapted to obtain a position 50 of the UAV 20 in the coordinate system 52. The position detection means 58 is adapted to receive beacon signals 54 of a type chosen amongst the group of GPS, GNSS, radio, optical, radar and sound. The beacon signal 54 may comprise information of the transmitters coordinates 56, being predetermined coordinates 56 in the coordinate system 52.

The system 1 also comprises distance measuring means 30, a detector 40, special equipment 48 and a processor 90. The distance measuring means 30 can be 3D profiling means e.g. a LiDAR 32. The detector 40 is adapted to perform an inspection 70. The inspection 70 could be imaging, collecting environmental samples, measuring weather data, visibility conditions amongst others. The special equipment 48 can interact with the surface of the object. The interaction may be a direct interaction with the surface. The special equipment 48 may be equipment which is operated in the close vicinity of the object or which is adhered to the object. The special equipment 48 may be cleaning equipment e.g. for wind turbine blades, building facades, etc. In another aspect, the special equipment 48 may be a repair unit amongst others.

The processor 90 may hold or communicate with one or more computer program products 92 and computer-readable medium 94. The processor may communicate with an external server 98 for transmitting 122 the collected datasets and/or processed datasets wirelessly. The external server 98 may hold one or more computer program products 92 and computer-readable medium 94. The external server 98 and/or the processor 90 my comprise the synchronisation system 96 for synchronizing collected and time stamped data.

The embodiment in figure 6B illustrates a system 1 and a method, wherein the UAV is guiding using the beacon signals 54. The beacon signalling means 84 is a light beam, e.g. a laser beam, and the position detection means 58 is a light detector. The laser beam being the beacon signal 54 may be used for navigating the UAV 20 along a flight path. The laser may be comprised in the system or be preinstalled as a beacon signal means 84 with known coordinates according to the coordinate system 52 of the UAV.

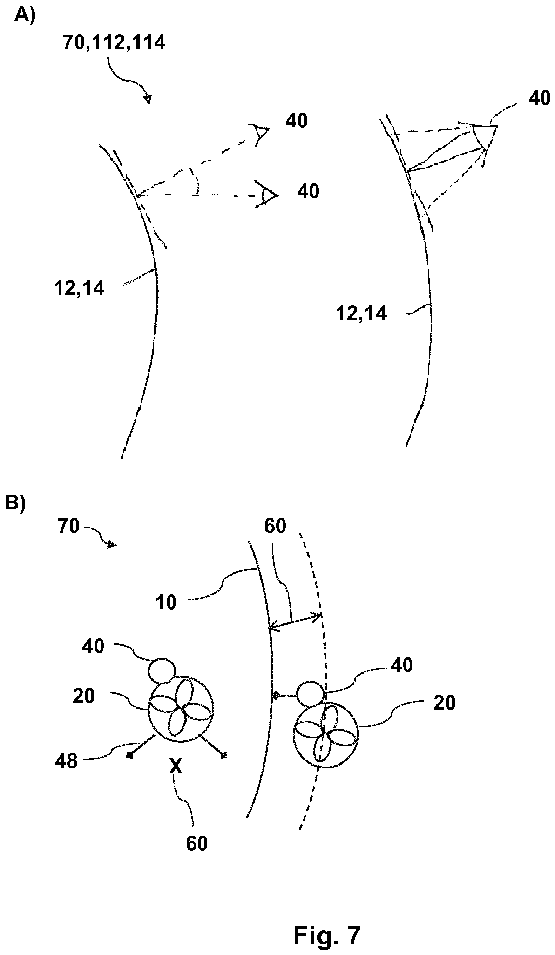

Figure 7 illustrates three further embodiments of the method 100 of performing an inspection 70 of an object using an unmanned aerial vehicle (UAV) 20. The inspection 70 in the embodiment of figure 7A includes imaging of the object surface 12. To achieve sharp images of a surface 12, the imaging sensor, e.g. a camera, may preferably be positioned such that the surface 12 is in focus and the correct image field is captured. One way to achieve this may be by the illustrated method of tracking 112 along a surface 12 of the object and angularly displacing 114 the detector 40 as a function of a curvature 14 of the object surface 12. The angular displacement is illustrated by the angle outline.

The inspection 70 in the embodiments of figure 7B includes collecting a sample from and/or of the object and/or performing measurements using special equipment 48 in direct contact with the object 10. Depending on the type of inspection 70 to be performed, the special equipment 48 may include landing gear adapted for holding the UAV fixed in the landing position, for example, on a wind turbine blade, on the side of a building amongst others. The illustrated embodiments illustrates one where the UAV distance 60 to the object will be substantially 0 as indicated by the X and another where the UAV is kept at a small distance 60 to the objects but with the detector 40 in direct contact with the object.

The detector may include diagnostic equipment, where the inspection is for condition monitoring.

The special equipment may also include repair systems for performing a temporary or permanent repair of the object is a fault in the object is found during the inspection 70 or from previous inspections.

In general, the additional method acts illustrated in the single figures 2-7 may be combined with other method acts into further embodiments of the method as illustrated in figure 1.

## Claims

1. A method (100) of performing an inspection (70) of an object (10) using an unmanned aerial vehicle (UAV) (20) carrying at least one distance measuring means (30) and a detector (40), the method comprising acts of:
- Obtaining (102) a position (50) of the UAV (20) in a coordinate system (52);
- Determining (104) a distance (60) of the UAV (20) to the object (10) based on measurements from the distance measuring means (30);
- Positioning (106) the UAV (20) as a function of at least the distance (60);
- Triggering (108) the detector (40) as a function of at least the position (50) of the UAV (20) to perform the inspection (70), and
- Performing (110) the inspection (70) for collecting a sample dataset (72).

2. Method (100) according to claim 1 comprising the further acts of:
- Establishing (116) a 3D profile (16) of the object (10) for determining a flight path (22) of the UAV (20) during inspection (70), and
- Setting (130) one or more triggering positions (24) along the flight path (22).

3. Method (100) according to claim 2 wherein the act of establishing (116) the 3D profile (16) of the object (10) is performed by providing an existing 3D profile (16) of the object (10) or by scanning (128) the surface (12) of the object (10) using the distance measuring means (30).

4. Method (100) according to any one or more of the preceding claims, wherein the act of positioning (106) is performed to maintain a predetermined distance (62), and the act of triggering (108) is performed with the detector (40) adjusted to perform the inspection (70) as a function of at least the predetermined distance (62).

5. Method (100) according to any one or more of the preceding claims, wherein the act of obtaining (102) the position (50) of the UAV (20) in the coordinate system (52) is performed by calculating the position (50), using at least one beacon signal (54) with predetermined coordinates (56) in the coordinate system (52).

6. Method (100) according to any one or more of the preceding claims further comprising an act of tracking (112) along a surface (12) of the object (10) and angularly displacing (114) the detector (40) as a function of a curvature (14) of the object surface (12).

7. Method (100) according to any one or more of the preceding claims comprising the acts of:
- Collecting (118) timestamped datasets of sample datasets (72), positions (50) of the UAV (20), and
- Time synchronising (120) the datasets to obtain time synchronized inspection results (74),
wherein said act of time synchronization (120) is performed in at least one synchronisation system (96) for synchronizing collected and time stamped data.

8. Method (100) according to any one or more of the preceding claims further comprising an act of:
- transmitting (122) the collected datasets and/or processed datasets wirelessly to an external server (98).

9. A system (1) for performing inspection (70) of an object (10) comprising at least:
- an unmanned aerial vehicle (UAV) (20);
- distance measuring means (30) adapted to at least determine (104) a distance (60) of the UAV (20) to the object (10);
- detector (40) adapted to perform (110) an inspection (70);
- trigger means (80) adapted to trigger (108) the detector (40), and
- processor (90) adapted to perform the acts of the method (100) according to any one of the claims 1-8.

10. System (1) according to claim 9 wherein the distance measuring means (30) is a LiDAR (32).

11. System (1) according to any one or more of claims 9-10 further comprising position detection means (58) adapted to obtain (102) a position (50) in a coordinate system (52) of the UAV (20), wherein the position detection means (58) is adapted to receive beacon signals (54) of a type chosen amongst the group of GPS, GNSS, radio, optical, radar and sound.

12. System (1) according to any one or more of claims 9-11 further comprising beacon signal means (84) adapted to provide beacon signals (54).

13. System (1) according to any one or more of the preceding claims 9-12 wherein the UAV (20) further comprises special equipment (48) for interacting with the surface (12) of the object (10).

14. Computer program product (92) comprising instructions to cause the processor (90) to execute the method acts of the method (100) according to any one or more of claims 1-8.

15. Computer program product (92) comprising instructions to perform pre-processing of the collected sample datasets (72) and/or quality inspections of the performed measurements with the distance measuring means (30) and/or the collected sample datasets (72).
